# EUROPÄISCHE PATENTSCHRIFT

(11) **EP 2 489 091 B1**
(45) Veröffentlichungstag und Bekanntmachung des Hinweises auf die Patenterteilung: **06.01.2016**
(21) Anmeldenummer: 10763631.8
(22) Anmeldetag: 07.10.2010
(51) Int. Cl.: H01M 8/24, H01M 8/02, H01M 10/0585, H01M 10/04

(54) **ZELLBLOCK MIT SEITLICHER ABSTÜTZUNG DER ZELLEN**
CELL BLOCK HAVING LATERAL SUPPORT OF THE CELLS
BLOC DE CELLULES À APPUI LATÉRAL DES CELLULES

(30) Priorität: 12.10.2009 DE 102009049043
(43) Veröffentlichungstag der Anmeldung: 22.08.2012
(73) Patentinhaber: Li-Tec Battery GmbH, 01917 Kamenz (DE)
(72) Erfinder: MEINTSCHEL, Jens, 02994 Bernsdorf (DE); HOHENTHANNER, Claus-Rupert, 63457 Hanau (DE); MIKUS, Holger, 01917 Kamenz (DE); SCHAEFER, Tim, 997622 Niedersachswerfen (DE)
(74) Vertreter: JENSEN & SON
(86) Internationale Anmeldenummer: PCT/EP2010/006141
(87) Internationale Veröffentlichungsnummer: WO 2011/045000

(56) Entgegenhaltungen:
- EP-A2- 0 155 695
- WO-A1-00/39364
- DE-A1- 4 309 976
- US-A- 3 126 302
- US-A- 3 856 573
- US-A1- 2004 023 090

## Beschreibung

Die vorliegende Erfindung betrifft einen Zellblock, d.h. eine Anordnung von wenigstens einer galvanischen Zelle und wenigstens zwei Rahmenelementen, eine Elektroenergie-Speichervorrichtung mit einer solchen Anordnung, und ein Fahrzeug mit einer solchen Elektroenergie-Speichervorrichtung.

Es ist bekannt, Energiespeicher und insbesondere Lithium-Batterien und Lithium-Akkumulatoren (im Rahmen dieser Anmeldung werden, wie in der Fahrzeugtechnik üblich, die Begriffe Batterie und Akkumulator synonym verwendet) in der Form dünner Platten herzustellen. Solche Energiespeicher werden Pouch-Zellen, Flachzellen oder Coffeebag-Zellen genannt.

Um die in der Praxis, etwa bei Automobilbatterien, angestrebten Spannungen und Kapazitäten zu erzielen, ist es erforderlich, mehrere Zellen zu einem Stapel anzuordnen und ihre Stromableiter auf geeignete Weise zusammenzuschalten. Die Verschaltung der Einzelzellen erfolgt üblicherweise auf einer (in der Regel als "oben" definierten) Schmalseite der Zellen, aus der die Stromableiter abragen. In der WO 2008/128764 A1, der WO 2008/128769 A1, WO 2008/128770 A1 und der WO 2008/128771 A1 sind derartige Verschaltungsanordnungen gezeigt. Die Stromableiter und ihre Verbindungen liegen dabei an der Oberseite frei.

Es ist den Erfindern auch eine druckschriftlich nicht näher belegbare Anordnung bekannt, bei der mehrere flache Zellen zwischen zwei Druckplatten gestapelt sind, wobei der Stapel durch Zugstäbe (Schraubbolzen bzw. Zylinderschrauben), die sich zwischen den Druckplatten erstrecken, zusammengehalten werden. Hierbei liegen die aktiven Teile der Speicherzellen unter dem Druck der Zugstäbe aufeinander.

Den Erfindern ist ferner eine der Öffentlichkeit noch nicht zugänglich gemachte Entwicklung bekannt, wonach Flachzellen mit von gegenüberliegenden Schmalseiten seitlich abragenden, flächigen Stromableitern zwischen Rahmen derart angeordnet sind, dass die Stromableiter von den Rahmen mittels einer Spannvorrichtung gefasst und die Zellen auf diese Weise in einem Block gehalten werden. Die Kontaktierung erfolgt dabei kraftschlüssig über die Spanneinrichtung mittels Kontaktelementen, die zwischen den Stromableitern mit eingeklemmt werden. Die Spannvorrichtung besteht aus Zugankern, die im Bereich der Kontaktelemente durch die Stromableiter hindurch verlaufen. Die radiale Zentrierung der Zellen erfolgt beispielsweise über die Ableiter, die an entsprechenden Konstruktionselementen (Nasen, Noppen, Leisten, Stifte etc.) der Rahmen anliegen oder diese umgreifen (z.B. Löcher in den Ableitern).

Es ist eine Aufgabe der vorliegenden Erfindung, den Aufbau nach dem Stand der Technik insbesondere (aber nicht nur) im Hinblick auf die vorstehend genannten Gesichtspunkte zu verbessern. Es ist insbesondere eine Aufgabe der vorliegenden Erfindung, eine Batterie zu schaffen, bei welcher mehrere Einzelzellen auf vorteilhafte Weise zu einem Block zusammengefasst sind.

Die Aufgabe wird durch die Merkmale der unabhängigen Ansprüche gelöst. Vorteilhafte Weiterbildungen der Erfindung bilden den Gegenstand der Unteransprüche.

Gemäß der Erfindung wird eine Anordnung von wenigstens einer galvanischen Zelle und wenigstens zwei Rahmenelementen vorgeschlagen, wobei jeweils eine galvanische Zelle zwischen zwei Rahmenelementen angeordnet ist, wobei die Anordnung einen Stapel ausbildet und eine Spanneinrichtung aufweist, welche die Anordnung in Stapelrichtung verspannt; wobei die galvanische Zelle einen flachen Hauptkörper und wenigstens zwei Stromableiter aufweist, wobei der Hauptkörper zwei flache Seiten und umlaufende Schmalseiten aufweist; wobei jedes Rahmenelement mehrere, vorzugsweise vier, geschlossen miteinander verbundene Balken aufweist, die zwischen sich einen freien Raum definieren; wobei der Hauptkörper der galvanischen Zelle in dem freien Raum zweier benachbarter Rahmenelemente aufgenommen ist; und wobei wenigstens im Bereich der Schmalseiten des Hauptkörpers, bis über eine Kante, an welcher die Schmalseiten in eine flache Seite der galvanischen Zelle übergehen, hinaus, zu dem freien Raum hin weisende Abschnitte der Rahmenelemente im Querschnitt der Kontur des Hauptkörpers der galvanischen Zelle folgend ausgebildet sind.

Unter einer galvanischen Zelle wird im Sinne der Erfindung eine vorzugsweise baulich in sich abgeschlossene und allein funktionsfähige Vorrichtung verstanden, die auch zur Abgabe elektrischen Stroms ausgelegt und eingerichtet ist. Es kann sich insbesondere, aber nicht nur, um eine elektrochemische Primär- oder Sekundärzelle handeln. Der Begriff ist im Sinne der Erfindung aber auch, ohne Beschränkung der Allgemeinheit, auf Kondensatoren, so genannte SuperCaps (eine besonders leistungsfähige Art Kondensator), Brennstoffzellen oder dergleichen anwendbar. Vorzugsweise bezieht sich die Erfindung auf Sekundärzellen vom Lithium-Typ. Dabei wird unter einem Stromableiter im Sinne der Erfindung ein von außen zugänglicher Anschluss verstanden, der mit den elektrochemisch aktiven Teilen im Inneren der galvanischen Zelle in Verbindung steht und auch als ein Pol der Zelle dient.

Die Anordnung mit einer galvanischen Zelle und zwei Rahmenelementen entspricht der kleinstmöglichen Größe der Anordnung. Üblicherweise werden mehr als eine galvanische Zelle vorhanden sein. Die Anordnung wird idealerweise so viele einzelne galvanische Zellen in geeigneter elektrischer Zusammenschaltung aufweisen, wie der gewünschten Gesamtspannung und der gewünschten Gesamtkapazität entspricht.

Unter einem Hauptkörper im Sinne der Erfindung wird die grundlegende geometrische Erscheinungsform der galvanischen Zelle verstanden, ohne eventuell davon abragende Anhängsel, Einkerbungen, Laschen, Befestigungselemente oder dergleichen. Der Hauptkörper ist nach der Definition der Erfindung mit zwei flachen Seiten und umlaufenden Schmalseiten ein flacher Quader, also plattenförmig, wobei Rundungen, Abschrägungen und/oder Wölbungen, konkav oder konvex, nicht ausgeschlossen sein sollen.

Ein freier Raum zwischen benachbarten Rahmenelementen schließt im Sinne der Erfindung außer dem Raum zwischen den Balken jedes Rahmenelements auch denjenigen Raum mit ein, der die freien Räume zwischen den Balken der Rahmenelemente verbindet, mit anderen Worten, den Spalt zwischen den Rahmenelementen.

Da nach der Erfindung wenigstens im Bereich der Schmalseiten des Hauptkörpers, bis über eine Kante, an welcher die Schmalseiten in eine flache Seite der galvanischen Zelle übergehen, hinaus, zu dem freien Raum hin weisende Abschnitte der Rahmenelemente im Querschnitt der Kontur des Hauptkörpers der galvanischen Zelle folgend ausgebildet sind, kann im Randbereich der Zelle ein gleichmäßiger Abstand zwischen diesem Randbereich und den Rahmenelementen sichergestellt werden. Hierdurch können auch die Vorteile erzielt werden, die Zellen seitlich an den Rahmenelementen abzustützen und/oder eine sichere Zentrierung der Zellen wenigstens in radialer Richtung während des Zusammenbaus und im Betrieb zu gewährleisten. Auf zusätzliche Konstruktionselemente zur seitlichen Fixierung der Zellen kann verzichtet und somit der konstruktive und fertigungstechnische Aufwand verringert werden. Eine zum Zwecke der Passung mit Zentrierelementen an den Rahmen enge Tolerierung der Ableiter zueinander, die ohne echte Fixierung in der Umhüllung bei der Verschweißung schwierig zu bewerkstelligen ist, ist nicht erforderlich. Die Kräfte auf die Verbindung zwischen Ableitern und Hüllfolie, insbesondere bei großen und schweren Zellen, können verringert werden.

Eine Weiterbildung der Erfindung ist dadurch gekennzeichnet, dass die Schmalseiten des Hauptkörpers der galvanischen Zelle jeweils zwei Flanken aufweisen, die sich im Querschnitt jeweils von einer der flachen Seiten aus zu einer zwischen den beiden flachen Seiten definierten Mittelebene hin erstrecken, wobei ein Winkel zwischen den Flanken und der sich daran anschließenden flachen Seite des Hauptkörpers der galvanischen Zelle 90° oder größer ist. Durch die Anschrägung der Flanken kann auch eine noch zuverlässigere Zentrierung erreicht werden.

Nach speziellen Weiterbildungen der Erfindung dienen die Bereiche der Rahmenelemente, die der Kontur des Hauptkörpers der galvanischen Zelle folgen, als Anschlagflächen, Anlageflächen oder Druckflächen für die galvanische Zelle. Genauer gesagt, wenn zwischen den besagten Flächen im zusammengebauten Zustand ein Abstand eingehalten wird, können auch Relativbewegungen zwischen den Zellen und den Rahmenelementen begrenzt werden. Wenn der Abstand Null wird, können solche Relativbewegungen auch gänzlich vermieden werden. Wenn zwischen den Flächen Druck ausgeübt wird, können die Zellen auch über diese Flächen, allein oder zusätzlich zu anderen Maßnahmen, eingespannt werden.

Eine Weiterbildung der Erfindung ist dadurch gekennzeichnet, dass der Hauptkörper der galvanischen Zelle einen aktiven Teil aufweist, welcher zur Aufnahme, Speicherung und Abgabe elektrischer Energie ausgelegt und eingerichtet ist und von zwei Hüllfolienlagen sandwichartig eingefasst ist, wobei die Hüllfolienlagen wenigstens an zwei gegenüberliegenden Schmalseiten, vorzugsweise rundum, seitlich von den Schmalseiten des Hauptkörpers abragen und eine Siegelnaht ausbilden, welche den aktiven Teil dicht abschließt, und wobei wenigstens Abschnitte der Siegelnaht von Balkenabschnitten benachbarter Rahmenelemente gefasst und mittels der Spanneinrichtung axial eingespannt sind. Unter einer Hüllfolienlage wird im Sinne der Erfindung eine Folie, ein- oder vorzugsweise mehrschichtig, verstanden, die um den aktiven Teil herum gelegt ist und eine reißwiderstandsfähige, gas- und feuchtigkeitsdichte Umhüllung wie auch gegebenenfalls eine elektromagnetische Abschirmung bildet. Die Hüllfolie kann einteilig - in diesem Fall ist der aktiven Teil in die Hüllfolie eingeschlagen - oder zweiteilig sein - in diesem Fall ist der aktive Teil sandwichartig dazwischengelegt. Auf jeder Flachseite der galvanischen Zelle befindet sich somit eine Hüllfolienlage. Unter einer Siegelnaht wird im Sinne der Erfindung eine Nahtstelle verstanden, an welcher die Hüllfolienlagen versiegelt - beispielsweise, ohne Beschränkung der Allgemeinheit, verklebt oder verschweißt - sind. Im Fall einer einteiligen Hüllfolie kann eine Siegelnaht über die Flachseite der galvanischen Zelle verlaufen und flach anliegen, während die beiden anderen Siegelnähte von gegenüberliegenden Schmalseiten der galvanischen Zelle abragen - etwa wie bei der Umhüllung einer bestimmten Art von Schokoladentafeln oder Müsli-Riegeln. Es können aber auch alle drei Siegelnähte von den Schmalseiten abragen. Im Fall einer zweiteiligen Hüllfolie verläuft die Siegelnaht vorzugsweise an allen vier Schmalseiten rundum. Wenn wenigstens Abschnitte der Siegelnaht von Balkenabschnitten benachbarter Rahmenelemente gefasst und mittels der Spanneinrichtung axial eingespannt sind (und die Zelle dadurch gehalten wird), kann auch eine einfache und zuverlässige Ausbildung eines Zellblocks bewerkstelligt werden. Die besondere Ausformung der Rahmenelemente, die der Kontur des Hauptteils der galvanischen Zelle in deren Randbereich folgt, kann dabei auch dafür sorgen, dass Spannungen in der Hüllfolie, die bei Relativbewegungen zwischen dem Hauptteil der galvanischen Zelle und der an den Rahmenelementen festgelegten Siegelnaht entstehen können, begrenzt oder vermieden werden.

Eine Weiterbildung der Erfindung ist dadurch gekennzeichnet, dass die Stromableiter mit dem aktiven Teil elektrisch und mechanisch verbunden sind, zwischen den zwei Hüllfolienlagen durch die Siegelnaht hindurch verlaufen und von dem Hauptkörper nach außen ragen, wobei sie vorzugsweise von zwei gegenüberliegenden Schmalseiten des Hauptkörpers abragen, und wobei die Siegelnaht insbesondere in denjenigen Abschnitten, in welchen die Stromableiter durch sie hindurch verlaufen, von den Balkenabschnitten der Rahmenelemente gefasst und mittels der Spanneinrichtung axial eingespannt sind. Bei dieser Anordnung ist insbesondere eingeschlossen, dass die Stromableiter selbst von außen frei zugänglich sind. Wird die galvanische Zelle an dieser Stelle gehalten, so kann auch die Verbindung der Stromableiter mit dem aktiven Teil im Inneren der Zelle zur stabileren Einspannung der Zelle ausgenutzt werden, da diese Verbindung Relativbewegungen des aktiven Teils weitgehend auffängt. Auch können die trägen Massen außen an den Stromableitern angebrachter Verbindungselemente von denjenigen des Hauptkörpers der galvanischen Zelle entkoppelt werden.

Eine Weiterbildung der Erfindung ist dadurch gekennzeichnet, dass zwischen den Schmalseiten des Hauptkörpers der galvanischen Zelle und den dessen Kontur folgenden Abschnitten der Rahmenelemente ein elastisches Element angeordnet ist, welches vorzugsweise form- oder stoffschlüssig an dem Rahmenelement befestigt ist. Unter einem elastischen Element wird im Sinne der Erfindung insbesondere ein Bauteil oder ein Abschnitt verstanden, der unter Druck weichelastisch nachgiebig ist. Solche Elemente können beispielsweise, ohne Beschränkung der Allgemeinheit, aus Elastomer, Schaumstoff, Gummi, Moosgummi, oder dergleichen hergestellt sein oder auch ein dünnwandiges, im Querschnitt elastisch stauchbares Profil, das beispielsweise, ohne Beschränkung der Allgemeinheit, aus Kunststoff hergestellt ist, sein. Derartige elastische Elemente können auch die Anschlag- oder Haltekräfte dämpfen und so die mechanischen Belastungen auf die galvanische Zelle weiter verringern.

Nach der Erfindung wird auch eine Anordnung von wenigstens einer galvanischen Zelle und wenigstens zwei Rahmenelementen vorgeschlagen, wobei jeweils eine galvanische Zelle zwischen zwei Rahmenelementen angeordnet ist, wobei die Anordnung einen Stapel ausbildet und eine Spanneinrichtung aufweist, welche die Anordnung in Stapelrichtung verspannt, wobei die Rahmenelemente jeweils mehrere, vorzugsweise vier, geschlossen miteinander verbundene Balken aufweisen, die zwischen sich einen freien Raum definieren, wobei der Hauptkörper der galvanischen Zelle in dem freien Raum zweier benachbarter Rahmenelemente aufgenommen ist, wobei die Spanneinrichtung Zuganker aufweist, welche sich durch Ankeraufnameabschnitte der Rahmenelemente hindurch in Stapelrichtung der Anordnung erstrecken, wobei die Zuganker, bezogen auf eine Schnittebene senkrecht zur Stapelrichtung, außerhalb eines Bereichs der galvanischen Zelle verlaufen, wobei die Ankeraufnahmeabschnitte durch Stege oder Laschen gebildet sind, welche von den Balken des Rahmenelements, vorzugsweise in Verlängerung jeweils eines Balkens, insbesondere jeweils beidseits in Verlängerung zweier paralleler Balken, quer zur Stapelrichtung abragen.

Wenn die Zuganker außerhalb eines Bereichs der galvanischen Zelle, also insbesondere auch außerhalb eines Bereichs der Stromableiter verlaufen, kann auch der weitere Vorteil erzielt werden, dass die Stromableiter gegenüber einer ebenfalls denkbaren Anordnung, bei welcher die Zuganker durch die Stromableiter hindurch verlaufen, konstruktiv einfacher gestaltet sein können und geometrisch nicht so genau toleriert werden müssen. Dies hilft auch, die Herstellungskosten zu senken und den Ausschuss der galvanischen Zellen zu verringern.

Die beiden vorstehend erläuterten Anordnungen gemäß der Erfindung sind besonders vorteilhaft miteinander kombinierbar.

Eine Weiterbildung der Erfindung ist dadurch gekennzeichnet, dass die Stromableiter der galvanischen Zelle von außen frei zugänglich sind. Es ist daher auch möglich, Verbindungselemente von außen anzubringen und gegebenenfalls wieder zu entfernen.

Eine Weiterbildung der Erfindung ist dadurch gekennzeichnet, dass, bezogen auf eine Schnittebene quer zur Stapelrichtung, die von einer Hüllkurve des Rahmenelements umschriebene Fläche den Umriss der galvanischen Zelle vollständig aufnimmt. Eine Hüllkurve im Sinne der Erfindung ist ein geschlossener, um die Außenkontur eines Rahmenelements gelegter, von außen betrachtet nur konvexer Linienzug. So können auch von außen zugängliche Stromableiter oder andere empfindliche Abschnitte zuverlässig vor unbeabsichtigter Berührung geschützt werden.

Eine Weiterbildung der Erfindung ist dadurch gekennzeichnet, dass die Stromableiter mehrerer galvanischer Zellen mittels Verbindungselemente derart miteinander verbunden sind, dass die galvanischen Zellen innerhalb der Anordnung eine Reihenschaltung oder eine Parallelschaltung oder eine Kombination hieraus bilden. Auf diese Weise kann auch ein Block mit geeigneten elektrischen Charakteristika, insbesondere Spannung und Kapazität, geschaffen werden. Dabei entspricht grundsätzlich die Spannung des Blocks der Summe der Zellspannungen der in Reihe geschalteten Zellen, und die Kapazität des Blocks entspricht der Summe der Kapazitäten der parallel geschalteten Zellen, wobei Schaltungsverluste und Zellenfehler in der Praxis zu berücksichtigen sind.

Die Erfindung ist insbesondere, aber nicht nur, für Anordnungen geeignet, bei welchen die galvanische(n) Zelle(n) (eine) Sekundärzellen ist/sind, wobei der aktive Teil wenigstens einen Stoff aufweist, der Lithium enthält.

Die Erfindung betrifft auch eine Elektroenergie-Speichervorrichtung, insbesondere Traktions- oder Antriebsbatterie, für ein Fahrzeug, mit einer der vorstehend beschriebenen, erfindungsgemäßen Anordnungen, sowie ein Fahrzeug mit einer solchen Elektroenergie-Speichervorrichtung.

Die vorstehenden und weitere Merkmale, Aufgaben und Vorteile der vorliegenden Erfindung werden aus der nachstehenden Beschreibung unter Bezugnahme auf die beigefügten Zeichnungen deutlicher ersichtlich. Darin zeigen:
- Fig. 1: eine perspektivische Gesamtansicht eines Zellblocks nach einem Ausführungsbeispiel der Erfindung;
- Fig. 2: eine perspektivische Explosionsdarstellung einer galvanischen Zelle mit zwei Rahmen aus der Batterie in Fig. 1;
- Fig. 3: eine Schnittdarstellung des Zellblocks in Fig. 1 im vertikalen Längsschnitt;
- Fig. 4: eine vergrößerte Darstellung einer Einzelheit "IV" in Fig. 3;
- Fig. 5: eine vergrößerte Darstellung eines abgewandelten Ausführungsbeispiels der Erfindung, wobei die dargestellte Einzelheit derjenigen in Fig. 4 entspricht; und
- Fig. 6: eine perspektivische, vergrößerte Darstellung eines Eckenbereichs eines Rahmens nach dem abgewandelten Ausführungsbeispiel.

Es ist darauf hinzuweisen, dass die Darstellungen in den Figuren schematisch sind und sich auf die Wiedergabe der für das Verständnis der Erfindung wichtigsten Merkmale beschränken. Auch ist darauf hinzuweisen, dass die in den Figuren wiedergegebenen Abmessungen und Größenverhältnisse allein der Deutlichkeit der Darstellung geschuldet sind und in keiner Weise einschränkend zu verstehen sind, es sei denn, aus der Beschreibung ergäbe sich etwas anderes.

Es folgt eine Beschreibung konkreter Ausführungsformen und möglicher Abwandlungen hiervon. Soweit in verschiedenen Ausführungsformen gleiche Bauteile verwendet werden, sind diese mit gleichen oder entsprechenden Bezugszeichen versehen. Auf die wiederholte Erläuterung bereits im Zusammenhang mit einer Ausführungsform erläuterter Merkmale wird weitgehend verzichtet. Dennoch sind, soweit es nicht ausdrücklich anders angegeben oder ersichtlich technisch unsinnig ist, die Merkmale, Anordnungen und Wirkungen einer Ausführungsform auch auf andere Ausführungsformen zu übertragen.

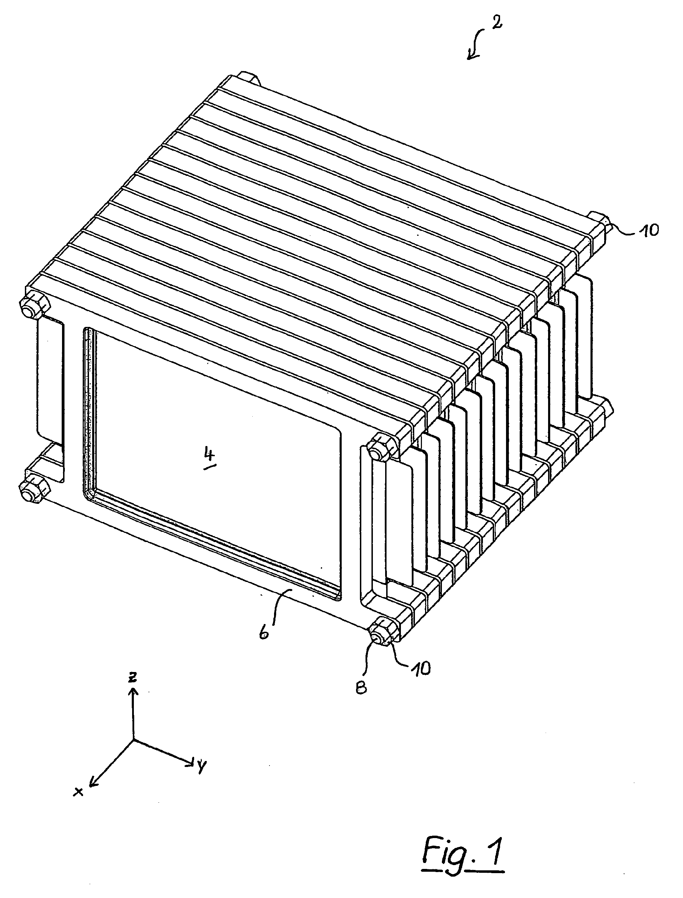

Fig. 1 ist eine perspektivische Darstellung eines zusammengebauten Zellblocks 2 nach einem Ausführungsbeispiel der Erfindung. In dem Zellblock 2 sind mehrere (hier: vierzehn) galvanische Zellen 4 (nachstehend als "Zellen" bezeichnet) von einer Mehrzahl von (hier: fünfzehn) Rahmen 6 gehalten. Jeweils zwei Rahmen 6 fassen eine Zelle 4 ein. Der Zellblock 2 ist eine Anordnung im Sinne der Erfindung.

Der Stapel aus Rahmen 6 und Zellen 4 ist durch mehrere (hier: vier) Zuganker 8 so verspannt, dass der Stapel einen in sich stabilen Block bildet. Die Zuganker 8 erstrecken sich durch Bohrungen (später beschrieben) in den Rahmen 6 und sind durch jeweils zwei Muttern 10, die auf die Enden der Zuganker 8 geschraubt sind, verspannt. Die Zuganker 8 und die Muttern 10 sind eine Spanneinrichtung im Sinne der Erfindung.

In der Figur sind, und diese Definition wird im Rahmen dieser Beschreibung beibehalten, die Raumrichtungen so festgelegt, dass die x-Richtung der Stapelrichtung des Zellblocks 2 entspricht, die y-Richtung der Breitenrichtung des Zellblocks 2 entspricht und die z-Richtung der Höhenrichtung des Zellblocks 2 entspricht. Die Stapelrichtung x wird im Rahmen dieser Erfindung auch als axiale Richtung, die y-Richtung als laterale Richtung, und die z-Richtung als vertikale Richtung bezeichnet. Jede Richtung senkrecht zur axialen (x-) Richtung, insbesondere die y- und die z-Richtung, wird auch als radiale Richtung bezeichnet. Somit bildet die x-y-Ebene eine horizontale Ebene und bilden die x-z-Ebene und die y-z-Ebene vertikale Ebenen. Diese Richtungsdefinitionen beziehen sich allein auf den Zellblock 2 selbst, schließen aber nicht aus, dass die gezeigte Anordnung nach der Erfindung in einer anderen globalen Raumlage eingesetzt wird.

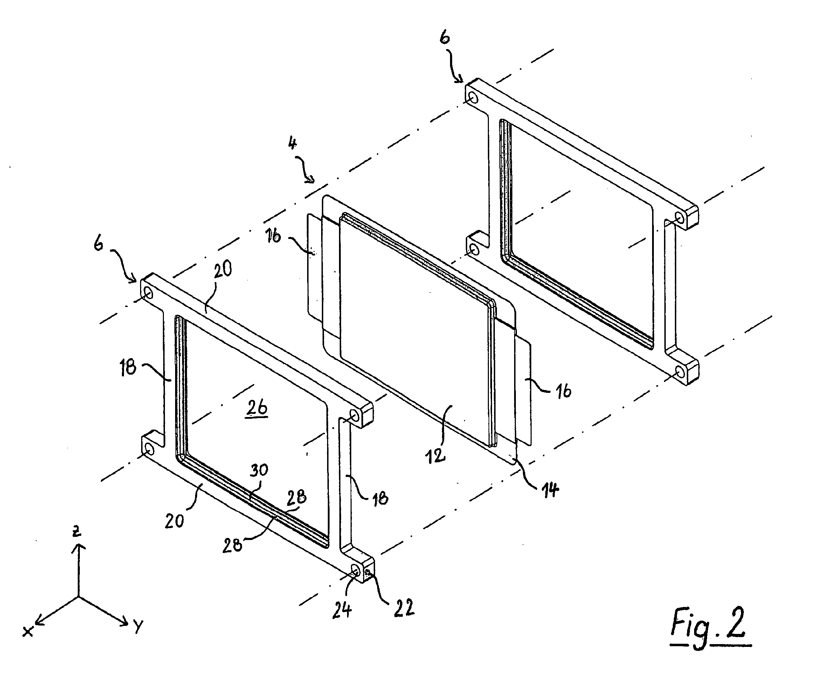

Fig. 2 ist eine perspektivische Explosionsdarstellung einer galvanischen Zelle mit zwei Rahmen des Zellblocks nach Fig. 1.

Die Zellen 4 sind Lithium-Ionen-Zellen in der Form so genannter Flachzellen, auch Pouch-Zellen oder Coffeebag-Zellen genannt. Diese galvanischen Zellen 4 weisen einen aktiven Teil (Hauptteil) 12 auf, der die Form eines flachen Quaders aufweist. In dem aktiven Teil 12 findet eine elektrochemische Reaktion zur Speicherung und Abgabe elektrischer Energie (Lade- und Entladereaktion) statt. Der in der Figur nicht näher dargestellte, innere Aufbau des aktiven Teils 12 entspricht einem flachen, laminierten Stapel aus elektrochemisch aktiven Elektrodenfolien zweier Arten (Kathode und Anode), elektrisch leitenden Folien zur Sammlung und Zuleitung oder Ableitung elektrischen Stroms zu und von den elektrochemisch aktiven Bereichen, und Separatorfolien zur Trennung der elektrochemisch aktiven Bereiche der zwei Arten voneinander. Wenigstens eine Art der elektrochemisch aktiven Elektrodenfolien weist eine Lithiumverbindung auf. Es handelt sich bei den Zellen 4 also um Lithium-Ionen-, Lithium-Polymer-Akkumulatorzellen oder dergleichen Zellen aus der Familie der Lithiumbatterien. Vorzugsweise ist ein Separator mit einem Vlies aus elektrisch nicht leitfähigen Fasern ausgebildet, wobei das Vlies auf mindestens einer Seite mit einem anorganischen Material beschichtet ist. Die EP 1 017 476 B1 beschreibt einen derartigen Separator und ein Verfahren zu dessen Herstellung. Ein Separator mit den oben genannten Eigenschaften ist derzeit unter der Bezeichnung "Separion" von der Evonik AG, Deutschland, erhältlich.

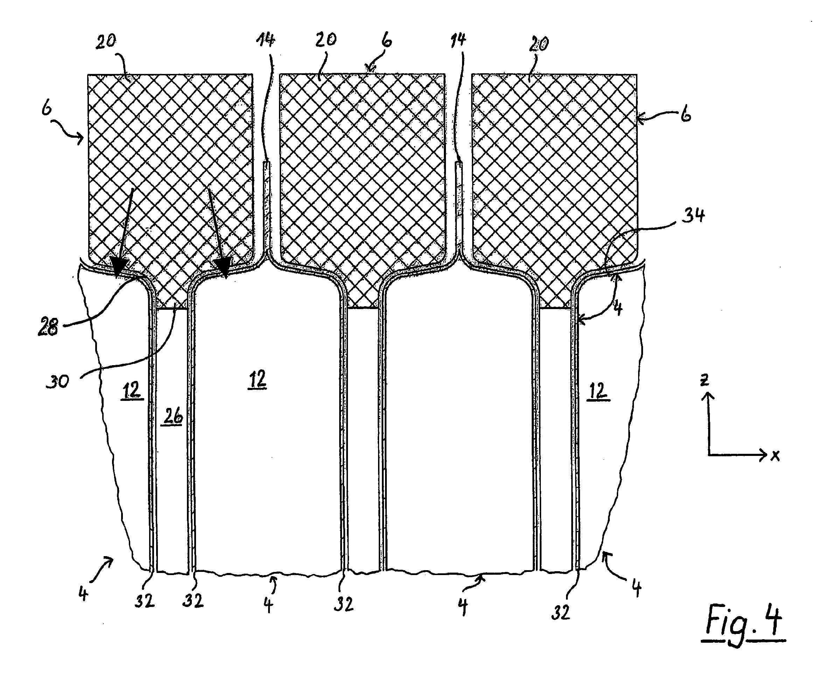

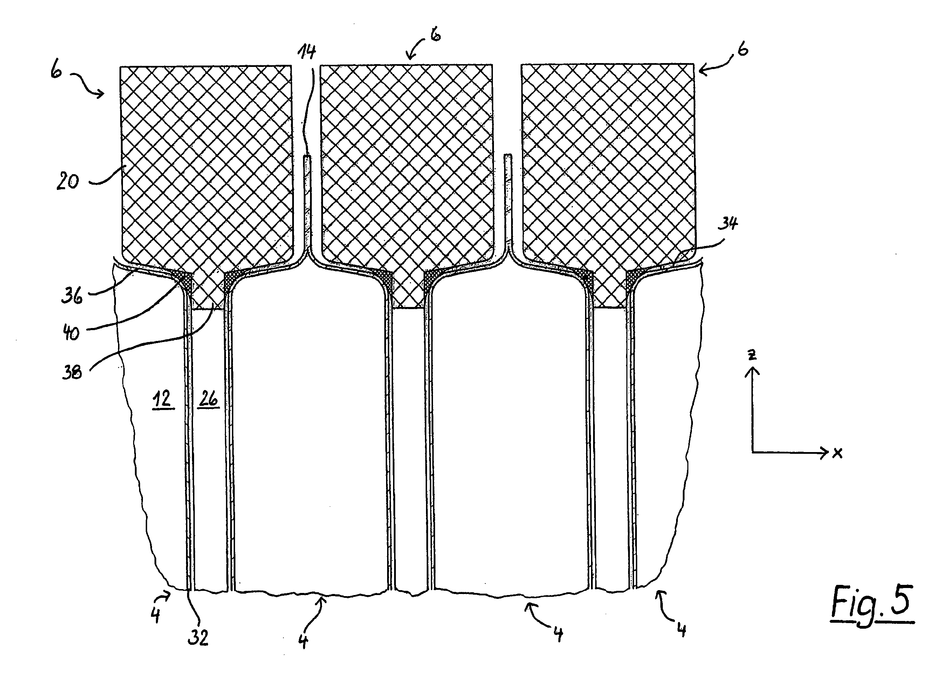

Der aktive Teil 12 der Zelle 4 wird von zwei in Fig. 2 nicht näher bezeichneten Folien (32 in Fig. 4 und 5) sandwichartig eingefasst. Die beiden Folien sind an ihren freien Enden gas- und feuchtigkeitsdicht verschweißt und bilden eine sogenannte Siegelnaht 14, die den aktiven Teil 12 als umlaufende, in radialer Richtung abregende, inaktive Randzone umgibt. Der aktive Teil 12 ist außerdem evakuiert, sodass die Hüllfolien eng anliegen. Der durch die Hüllfolien eingeschlossene aktive Teil 12, ohne die Siegelnaht, bildet geometrisch einen Hauptteil der Zelle 4 im Sinne der Erfindung.

Zwei Stromableiter 16 ragen an den lateralen (in y-Richtung oder Breitenrichtung gegenüber liegenden) Schmalseiten der Zelle 4 durch die Siegelnaht 14 hindurch aus dem Inneren der Zelle 4 nach außen und sind dort als flächige Gebilde zugänglich. Die Stromableiter 16 stehen mit den elektrochemisch aktiven Kathoden- und Anodenbereichen im Inneren des aktiven Bereichs 12 in Verbindung und dienen so als Kathoden- und Anodenanschlüsse der Zelle 4.

Die Rahmen 6 sind aus vier umlaufenden Balken 18, 20, 18, 20 gebildet. Dabei werden zum Zwecke der Beschreibung die vertikalen Balken 18 von den horizontalen Balken 20 unterschieden. Die horizontalen Balken 20 setzen sich über die Grenzen der vertikalen Balken 18 hinaus als Laschen 22 in horizontaler Richtung fort. Die Laschen 22 können einen anderen Querschnitt als die horizontalen Balken 20 aufweisen. Insbesondere können sie, müssen aber nicht, auch eine andere vertikale Stärke als die horizontalen Balken 20 aufweisen. Durch jede Lasche 22 erstreckt sich in x-Richtung (Stapelrichtung) eine Bohrung 24. Die Bohrungen 24 dienen der Aufnahme der Zuganker 8 (Fig. 1), die hier nur durch ihre Achsenlinien (strichpunktierte Linien in Fig. 2) angedeutet sind. Demnach sind die Rahmen 6 des Zellblocks 2 quasi auf die sich durch die Bohrungen 24 der Laschen 22 erstreckenden Zuganker 8 gefädelt.

Die Balken 18, 20 bilden einen geschlossenen Rahmen, umschreiben also ein Fenster 26. Auf der dem Fenster 26 zugewandten Seite (der Innenseite) weisen die Balken 18, 20 jeweils zwei Auskehlungen 28 auf, die jeweils von den Stirnseiten (also denjenigen Seiten, deren Flächennormalen entlang der Stapelrichtung verlaufen) her so eingebracht sind, dass ein umlaufender, in das Fenster 26 ragender Steg 30 stehen bleibt. Der Bereich in radialer Richtung zwischen den Auskehlungen 28 und in axialer Richtung zwischen den Stegen 30 zweier benachbarter Rahmen 6 bilden einen freien Raum zwischen Rahmenelementen im Sinne der Erfindung.

Im Zusammenbau (Fig. 1) befinden sich die Hauptteile der Zellen 4 in diesem freien Raum. Die Stromableiter 16 erstrecken sich zwischen den vertikalen Balken 18 der benachbarten Rahmen 6 hindurch und sind von den Seiten der Rahmen frei zugänglich, wobei sie in vertikaler Richtung durch die Laschen 22 eingerahmt und so vor zufälligen Berührungen geschützt sind. Die Stromableiter 16 sind von der Seite zugänglich und können so durch geeignete Verbindungselemente (nicht näher dargestellt) kontaktiert werden; gleichfalls können die Verbindungen ohne vollständige Demontage des Zellblocks 2 etwa zu Wartungs- oder Messzwecken gelöst werden.

Obschon in der Figur nicht näher dargestellt, sind die Zellen 4 in dem Zellblock 2 (Fig. 1) mit alternierender Polarität angeordnet. D.h. die Zellen 4 sind so angeordnet, dass auf jeder Seite, auf welcher die Stromableiter 16 frei liegen, jeweils positive und negative Pole (Stromableiter 16) einander abwechseln. Ebenfalls in der Figur nicht näher dargestellt sind die bereits erwähnten Verbindungselemente, welche an den Stromableitern 16 angreifen und diese in geeigneter Weise zu einer Batterie bzw. einem Akkumulator verbinden. Eine solche Batterie ist eine Elektroenergie-Speichervorrichtung im Sinne der Erfindung.

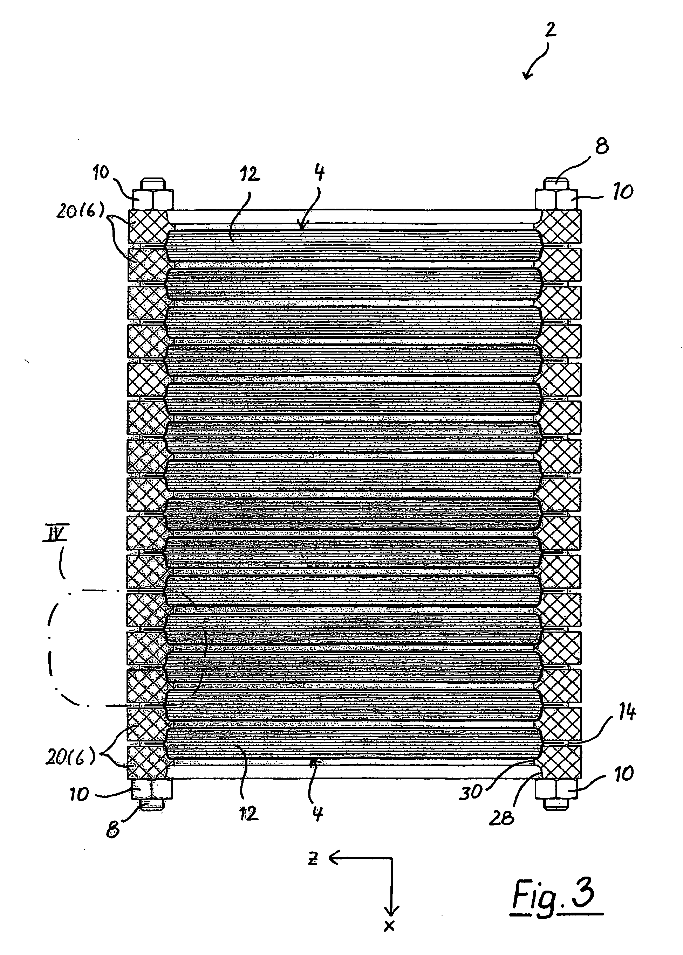

Fig. 3 ist eine Schnittdarstellung des Zellblocks in Fig. 1 im vertikalen Längsschnitt, und Fig. 4 ist eine vergrößerte Darstellung einer Einzelheit "IV" in Fig. 3. Die Einzelheit "IV" enthält die Querschnitte von drei aufeinander folgenden horizontalen Balken 20 entsprechender Rahmen 6 und eines Teils der sich daran anschließenden Zellen 4. Der Schnitt in Fig. 3 und 4 verläuft durch den aktiven Teil 12 und die Siegelnaht 14 der Zellen 4 und die horizontalen Balken 20 der Rahmen 6. In Fig. 3 ist die Schichtanordnung der Folien innerhalb des aktiven Teils 12 mit parallelen Linien angedeutet; in Fig. 4 wurde auf diese Darstellung verzichtet. In Fig. 4 sind dagegen die Hüllfolien 32 deutlich dargestellt. Jede der Hüllfolien 32 ist eine Hüllfolienlage im Sinne der Erfindung.

Die Schmalseiten des Hauptkörpers der galvanischen Zelle weisen jeweils zwei Flanken 34 auf, die sich im Querschnitt jeweils von einer der flachen Seiten aus zu einer zwischen den beiden flachen Seiten definierten Mittelebene hin erstrecken und dann in die Siegelnaht 14 übergehen. Die Auskehlungen 28 und Stege 30 folgen der Außenkontur des aktiven Teils 12 der Zellen 4 (also deren Hauptkörper) im Bereich von dessen Schmalseiten (Flanken 34) und bis über diejenige Kante, an welcher die Schmalseiten in die flache Seite der Zelle 4 übergehen, hinaus. Dabei ist die Länge (gemeint ist die Erstreckung nach innen) der Stege 30 auf den Randbereich der flachen Seite der Zelle 4 beschränkt. Sie ist vorzugsweise nicht länger als die halbe Dicke, besonders bevorzugt nicht länger als die Hälfte der halben Dicke des Hauptkörpers der Zelle 4.

Die Flanken 34 und entsprechend auch die Auskehlungen 28 weisen zur Querschnittsebene x-y, also zu den Flachseiten der Zellen 4, einen Flankenwinkel ϕ auf, der 90° oder größer ist. Bei geeigneter Einstellung des Flankenwinkels ϕ kann eine radiale und axiale Zentrierung bzw. Führung zwischen den Flanken 34 und den Auskehlungen 28 erfolgen, ohne dass die Kante des aktiven Teils 12 an den Steg 30 stößt. Wenn der Flankenwinkel ϕ nicht größer als 120° gewählt wird, können axiale Anteile von Führungskräften begrenzt und die Feineinstellung des Abstands in axialer Richtung optimiert werden. So kann insgesamt eine sanfte aber wirksame Zentrierung verwirklicht werden. Als ein praktikabler Bereich für den Flankenwinkel ϕ hat sich ein Bereich von 92,5° bis 115° herausgestellt, wobei ein Bereich von 95° bis 110° besonders bevorzugt wird.

Die Siegelnaht 14 ist zwischen den horizontalen Balken 20 mit deutlichem Abstand frei. Die Abschnitte der Rahmenelemente, die der Kontur des Hauptkörpers der galvanischen Zelle folgen, also insbesondere die abgeschrägten Flächen und der Grund der Auskehlungen 28, bilden Anlageflächen für die Schmalseiten (Flanken 34) des Hauptkörpers. Die Zugspannung der Zuganker 8 ist dabei vorzugsweise so eingestellt, dass die Auskehlungen 28 Druck in radialer Richtung (quer zur Stapelrichtung) auf die Schmalseiten (Flanken 34) der Hauptkörper der Zellen 4 ausüben (vgl. Pfeile in Fig. 4). Die Zellen 4 werden so zuverlässig in ihrer Lage gehalten, und zwar in radialer wie axialer Richtung. Die Stege 30 wirken dabei als Endanschlag und verhindern so eine übergroße seitliche Pressung der Flanken 34. Der weitaus größte Teil der Flachseiten der Zellen 4 wird so von mechanischer Belastung frei gehalten.

Obschon in der Figur nicht näher dargestellt, können Anschlagelemente vorgesehen sein, welche dafür sorgen, dass der axiale Abstand zwischen Rahmen 6 eine vorgegebene Grenze nicht unterschreitet. Solche Anschlagelemente können z.B. Scheiben sein, die zwischen den Rahmen 6 jeweils über die Zuganker 8 geschoben sind, oder Verdickungen an den Rahmen, insbesondere im Bereich der Laschen 22, oder dergleichen. So können die Spannkräfte auf die Flanken der Zellen 4 begrenzt werden, auch wenn die Zuganker 8 mit hohen Drehmomenten angezogen werden.

Nach dem vorstehenden Ausführungsbeispiel folgen die Auskehlungen 28 und Stege 30 der Außenkontur des aktiven Teils 12 der Zellen 4 in deren Randbereich derart, dass Druck quer zur Stapelrichtung auf die Schmalseiten (Flanken 34) der Hauptkörper der Zellen 6 ausgeübt wird, und die Siegelnaht rundum frei von Spannkräften ist.

In einer nicht näher dargestellten Alternative weisen die Auskehlungen 28 im Einbauzustand einen geringen Abstand von den Flanken 34 auf. Die Zellen 4 werden dagegen im Bereich der Siegelnaht 14, insbesondere dort, wo die Stromableiter 16 hindurchtreten, gehalten. Hierzu sind die Dicke (die Ausdehnung in Stapelrichtung x) der horizontalen und vertikalen Balken 20, 18 der Rahmen 6 und die Tiefe der Auskehlungen 28 an die Dicke der Zellen 4, der Stromableiter 16 und der Hüllfolien 32 derart angepasst, dass die vertikalen Balken 18 in Anlage an die Hüllfolien 32 im Bereich des Durchtritts der Stromableiter 16 (vgl. Fig. 2) kommen, bevor die Auskehlungen 28 in Anlage an die Flanken 34 oder die Stege 30 in Anlage an die Randbereiche der aktiven Teile 12 der Zellen 4 kommen können. So werden die Zellen 4 zuverlässig zwischen den Rahmen 6 eingespannt, wobei die Versiegelung zwischen den Stromableitern 16 und den Hüllfolien 32 frei von Scherkräften ist. Ausweichbewegungen der aktiven Teile 12 gegenüber den Rahmen 6, insbesondere in radialer Richtung (Richtungen senkrecht zur Stapelrichtung x), aber auch in Stapelrichtung selbst, werden an der Innenkontur der Rahmen 6 (an der Auskehlung 28 und dem Steg 30) gestoppt und so in engen, tolerierbaren Grenzen gehalten. Unzulässige mechanische Belastungen der Hüllfolien 32 und der Verbindungsstellen der Stromableiter innerhalb der Zellen 4 können daher ebenfalls vermieden werden.

Bei dieser Abwandlung können die Rahmen 6 aus einem Material, etwa einem Kunststoff, welches geringe elastische Stauchungen erlaubt, hergestellt und derart dimensioniert sein, dass die Auskehlungen 28 bei Einstellung eines bestimmten Anpressdrucks der Zuganker 8 sanft an den Flanken 34 der Zellen 4 anliegen. So können Relativbewegungen der aktiven Teile 12 der Zellen 4 gegenüber den Rahmen 6 praktisch ausgeschlossen werden.

Fig. 5 zeigt in einer der Einzelheit von Fig. 4 entsprechenden Darstellung ein abgewandeltes Ausführungsbeispiel der vorliegenden Erfindung. Der Aufbau des Zellblocks entspricht bis auf die nachstehend diskutierten Abweichungen demjenigen des vorstehend beschriebenen Ausführungsbeispiels.

Bei diesem abgewandelten Ausführungsbeispiel sind die Auskehlungen durch Ausklinkungen 36 ersetzt, die dem Flankenwinkel der Flanken 34 folgen, aber scharfkantig (ohne merkliche Rundung) in einen Steg 38 übergehen. (Der einzige Unterschied zwischen dem Steg 38 dieses abgewandelten Ausführungsbeispiels und dem Steg 30 des vorherigen Ausführungsbeispiels besteht in der fehlenden Rundung im Übergang zur Ausklinkung 36.) In der Ecke zwischen der Ausklinkung 36 und dem Steg 38 ist ein Elastomer-Streifen 40 angeordnet und form- und/oder stoffschlüssig befestigt, welcher die Kante zwischen der Schulter 34 und der Flachseite des aktiven Teils 12 der Zelle 4 berührt. So erfolgt eine weiche Abstützung der aktiven Teile 12 der Zellen 4 innerhalb der Rahmen 6. Die Ausklinkung 36 und der Steg 38 selbst berühren bei diesem Ausführungsbeispiel die Zelle 4 nicht. Als Elastomer im Sinne der Erfindung kann jedes technisch sinnvolle, weichelastische Material wie etwa Schaumstoff, Gummi, Moosgummi, oder dergleichen oder auch ein dünnwandiges, im Querschnitt elastisch stauchbares Profil, das beispielsweise, ohne Beschränkung der Allgemeinheit, aus Kunststoff hergestellt ist, verwendet werden. Der Elastomer-Streifen 40 ist ein elastisches Element im Sinne der Erfindung.

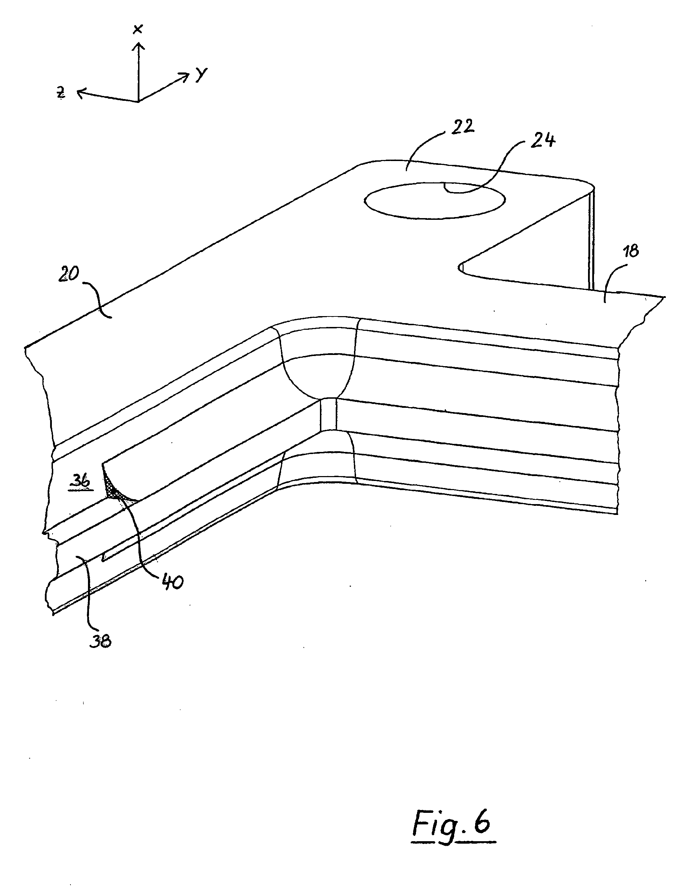

Fig. 6 ist eine perspektivische, vergrößerte Darstellung eines Eckenbereichs eines Rahmens nach dem abgewandelten Ausführungsbeispiel, also im Übergangsbereich zwischen einem vertikalen Balken 18 und einem horizontalen Balken 20.

Der Elastomer-Streifen 40 ist entweder aufgeklebt oder direkt aufgespritzt oder auf andere geeignete Weise befestigt. Es kann auch ausreichen, wenn der Elastomer-Streifen 40 allein durch seine Eigenspannung hält, da er nach Montage des Zellblocks 2 form- und kraftschlüssig in seiner Lage zwischen der Zelle 4 und dem Rahmen 6 gehalten wird.

Auch bei diesem abgewandelten Ausführungsbeispiel können Anschlagelemente vorgesehen sein, welche dafür sorgen, dass bei Anziehen der Zuganker 8 ein gewisser Abstand zwischen benachbarten Rahmen 6 und damit ein gewisser Mindestabstand zwischen den Ausklinkungen 36 und den Flanken der Zellen 4 eingehalten wird, sodass gewährleistet ist, dass nur die Elastomer-Streifen 40 mit begrenzter Kraft auf die Flanken drücken.

Auch dieses abgewandelte Ausführungsbeispiel kann alternativ so ausgeführt werden, dass die Zellen 4 auch an der Siegelnaht 14 eingespannt sind, vorzugsweise im Bereich des Durchtritts der Stromableiter 16. Der Elastomer-Streifen 40 würde in diesem Fall im Wesentlichen nur die Aufgabe der radialen Zentrierung und der Abdämpfung von axialen Ausweichbewegungen der Hauptkörper der Zellen 4 erfüllen.

### Abwandlungen der Ausführungsformen

Obschon die vorliegende Erfindung vorstehend unter Bezugnahme auf konkrete Ausführungsbeispiele in ihren wesentlichen Merkmalen beschrieben wurde, versteht sich, dass die Erfindung nicht auf diese Ausführungsbeispiele beschränkt ist, sondern in dem durch die Patentansprüche vorgegebenen Umfang und Bereich abgewandelt und erweitert werden kann, beispielsweise, aber nicht ausschließlich, wie es nachstehend angedeutet ist.

In den vorstehenden Ausführungsbeispielen wurden Elektroenergie-Speicherzellen vom Typ eines Lithium-Ionen-Sekundärspeichers (Akkumulators) als galvanische Zellen beschrieben. Der Begriff ist jedoch im Rahmen der Erfindung auf jeden Typ Form von Elektroenergie-Speichervorrichtungen anwendbar. Sie kann auf Primärspeicher (Batterien im eigentlichen Sinn) wie auf Sekundärspeicher angewendet werden. Ebenso ist die Art der elektrochemischen Reaktion zur Speicherung und Abgabe elektrischer Energie nicht auf Lithium-Metalloxidreaktionen beschränkt, sondern können die einzelnen Speicherzellen auf jeder elektrochemischen Reaktion beruhen. Ebenso können auch Kondensatoren, Supercaps und dergleichen in entsprechender Weise angeordnet werden und

Die Anzahl der Zellen und Rahmen ist für das Verständnis und den Umfang der Erfindung ohne Belang. Es können mehr oder weniger als vierzehn Zellen 4 und fünfzehn Rahmen 6 vorgesehen sein. Es ist jedoch im Allgemeinen ein Rahmen 6 mehr als Zellen 4 vorhanden, sodass jede Zelle 4 zwischen jeweils zwei benachbarten Rahmen 6 aufgenommen ist. Zur schonenden Aufnahme und Verteilung der vergleichsweise punktuellen Druckkräfte, die von den Zugankern 8 über die Muttern 10 in den Zellblock eingeleitet werden, können Scheiben oder auch Endrahmen (nicht näher dargestellt) vorgesehen sein, auf welchen die Muttern 10 aufliegen.

Die Siegelnaht 14 kann in einer Abwandlung entlang der oberen und unteren Schmalseite gefaltet sein und dort jeweils einen Falz (nicht näher dargestellt) bilden, der die Siegelnaht an dieser Stelle stabilisiert und einem Einreißen vorbeugt. Sofern die Einspannung der Zellen 4 an der Siegelnaht 14 erfolgt, kann die Dicke des Falzes an die Dicke der Stromableiter 16 einschließlich Folienlagen 32 angepasst sein, um eine Einspannung durch die vertikalen und horizontalen Balken 18, 20 bei gleichmäßiger Balkendicke zu ermöglichen.

### Liste der Bezugszeichen:

- 2: Zellblock
- 4: galvanische Zelle
- 6: Rahmen
- 8: Zuganker
- 10: Mutter
- 12: Aktiver Teil einer Zelle 4
- 14: Siegelnaht
- 16: Stromableiter
- 18: vertikaler Balken eines Rahmens 6
- 20: horizontaler Balken
- 22: Lasche
- 24: Bohrung
- 26: Fenster
- 28: Auskehlung
- 30: Steg
- 32: Hüllfolie
- 34: Flanke
- 36: Ausklinkung
- 38: Steg
- 40: Elastomer-Streifen

- x, y, z: Raumrichtungen (x: axial; y: lateral; z: vertikal)

Es wird ausdrücklich darauf hingewiesen, dass vorstehende Bezugszeichenliste integraler Bestandteil der Beschreibung ist.

## Patentansprüche

1. Anordnung von wenigstens einer galvanischen Zelle und wenigstens zwei Rahmenelementen, wobei jeweils eine galvanische Zelle zwischen zwei Rahmenelementen angeordnet ist, wobei die Anordnung einen Stapel ausbildet und eine Spanneinrichtung aufweist, welche die Anordnung in Stapelrichtung verspannt,
wobei die galvanische Zelle einen flachen Hauptkörper und wenigstens zwei Stromableiter aufweist, wobei der Hauptkörper zwei flache Seiten und umlaufende Schmalseiten aufweist;
wobei jedes Rahmenelement mehrere, vorzugsweise vier, geschlossen miteinander verbundene Balken aufweist, die zwischen sich einen freien Raum definieren;
wobei der Hauptkörper der galvanischen Zelle in dem freien Raum zweier benachbarter Rahmenelemente aufgenommen ist; und
wobei wenigstens im Bereich der Schmalseiten des Hauptkörpers bis über eine Kante, an welcher die Schmalseiten in eine flache Seite der galvanischen Zelle übergehen, hinaus, zu dem freien Raum hin weisende Abschnitte der Rahmenelemente im Querschnitt der Kontur des Hauptkörpers der galvanischen Zelle folgend ausgebildet sind.

2. Anordnung gemäß Anspruch 1,
**dadurch gekennzeichnet, dass**
der Hauptkörper der galvanischen Zelle einen aktiven Teil aufweist, welcher zur Aufnahme, Speicherung und Abgabe elektrischer Energie ausgelegt und eingerichtet ist und von zwei Hüllfolienlagen sandwichartig eingefasst ist, wobei die Hüllfolienlagen wenigstens an zwei gegenüber liegenden Schmalseiten seitlich von den Schmalseiten des Hauptkörpers abragen und eine Siegelnaht ausbilden, welche den aktiven Teil dicht abschließt, und wobei wenigstens Abschnitte der Siegelnaht von Balkenabschnitten benachbarter Rahmenelemente gefasst und mittels der Spanneinrichtung axial eingespannt sind.

3. Anordnung gemäß einem der vorhergehenden Ansprüche,
**dadurch gekennzeichnet, dass**
zwischen den Schmalseiten des Hauptkörpers der galvanischen Zelle und den dessen Kontur folgenden Abschnitten der Rahmenelemente ein elastisches Element angeordnet ist, welches stoffschlüssig an dem Rahmenelement befestigt ist.

4. Anordnung gemäß einem der vorhergehenden Ansprüche,
**dadurch gekennzeichnet, dass**
zwischen den Schmalseiten des Hauptkörpers der galvanischen Zelle und den dessen Kontur folgenden Abschnitten der Rahmenelemente ein elastisches Element angeordnet ist, welches formschlüssig an dem Rahmenelement befestigt ist.

5. Anordnung gemäß einem der vorhergehenden Ansprüche,
**dadurch gekennzeichnet, dass**
die Schmalseiten des Hauptkörpers der galvanischen Zelle jeweils zwei Flanken aufweisen, die sich im Querschnitt jeweils von einer der flachen Seiten aus zu einer zwischen den beiden flachen Seiten definierten Mittelebene hin erstrecken, wobei ein Winkel zwischen den Flanken und der sich daran anschließenden flachen Seite des Hauptkörpers der galvanischen Zelle 90° oder größer ist.

6. Anordnung gemäß einem der vorhergehenden Ansprüche,
**dadurch gekennzeichnet, dass**
Abschnitte der Rahmenelemente, die der Kontur des Hauptkörpers der galvanischen Zelle folgen, Anlageflächen für die Schmalseiten des Hauptkörpers bilden, wobei die Anlageflächen Druck in radialer Richtung auf die Schmalseiten des Hauptkörpers ausüben.

7. Anordnung gemäß einem der vorstehenden Ansprüche,
**dadurch gekennzeichnet, dass**
die Stromableiter mit dem aktiven Teil elektrisch und mechanisch verbunden sind, zwischen den zwei Hüllfolienlagen durch die Siegelnaht hindurch verlaufen und von dem Hauptkörper nach außen ragen, wobei sie vorzugsweise von zwei gegenüber liegenden Schmalseiten des Hauptkörpers abragen, und wobei die Siegelnaht insbesondere in denjenigen Abschnitten, in welchen die Stromableiter durch sie hindurch verlaufen, von den Balkenabschnitten der Rahmenelemente gefasst und mittels der Spanneinrichtung axial eingespannt sind.

8. Anordnung gemäß einem der vorstehenden Ansprüche,
**dadurch gekennzeichnet, dass**
die Spanneinrichtung Zuganker aufweist, welche sich durch Ankeraufnahmeabschnitte der Rahmenelemente hindurch in Stapelrichtung der Anordnung erstrecken und welche, bezogen auf eine Schnittebene senkrecht zur Stapelrichtung, vorzugsweise außerhalb eines Bereichs der galvanischen Zelle liegen.

9. Anordnung gemäß Anspruch 8,
**dadurch gekennzeichnet, dass**
die Ankeraufnahmeabschnitte durch Stege oder Laschen gebildet sind, welche von den Balken des Rahmenelements, vorzugsweise in Verlängerung jeweils eines Balkens, insbesondere jeweils beidseits in Verlängerung zweier paralleler Balken, quer zur Stapelrichtung abragen.

10. Anordnung gemäß einem der vorstehenden Ansprüche
**dadurch gekennzeichnet, dass**
die Spanneinrichtung Zuganker aufweist, welche sich durch Ankeraufnameabschnitte der Rahmenelemente hindurch in Stapelrichtung der Anordnung erstrecken, wobei die Zuganker, bezogen auf eine Schnittebene senkrecht zur Stapelrichtung, außerhalb eines Bereichs der galvanischen Zelle verlaufen, wobei die Ankeraufnahmeabschnitte durch Stege oder Laschen gebildet sind, welche von den Balken des Rahmenelements, vorzugsweise in Verlängerung jeweils eines Balkens, insbesondere jeweils beidseits in Verlängerung zweier paralleler Balken, quer zur Stapelrichtung abragen.

11. Anordnung gemäß einem der vorstehenden Ansprüche,
**dadurch gekennzeichnet, dass**
die Stromableiter der galvanischen Zelle von außen frei zugänglich sind.

12. Anordnung gemäß einem der vorstehenden Ansprüche,
**dadurch gekennzeichnet, dass**
bezogen auf eine Schnittebene quer zur Stapelrichtung, die von einer Hüllkurve des Rahmenelements gelegten Linie umschriebene Fläche den Umriss der galvanischen Zelle vollständig aufnimmt.

13. Anordnung gemäß einem der vorstehenden Ansprüche,
**dadurch gekennzeichnet, dass**
die Stromableiter mehrerer galvanischer Zellen mittels Verbindungselementen derart miteinander verbunden sind, dass die galvanischen Zellen innerhalb der Anordnung eine Reihenschaltung oder eine Parallelschaltung oder eine Kombination hieraus bilden.

14. Anordnung gemäß einem der vorstehenden Ansprüche,
**dadurch gekennzeichnet, dass**
die galvanische(n) Zelle(n) (eine) Sekundärzelle(n) ist/sind, wobei der aktive Teil wenigstens einen Stoff aufweist, der Lithium enthält.

15. Elektroenergie-Speichervorrichtung, insbesondere Traktions- oder Antriebsbatterie, für ein Fahrzeug, mit einer Anordnung gemäß einem der vorstehenden Ansprüche.

16. Fahrzeug mit einer Elektroenergie-Speichervorrichtung gemäß Anspruch 15.

## Claims

1. Assembly of at least one galvanic cell and at least two frame elements, wherein a galvanic cell is arranged between each two frame elements, wherein the assembly forms a stack and has a tensioning means which braces the assembly in the stacking direction,
wherein the galvanic cell has a flat main body and at least two current conductors, wherein the main body has two flat sides and peripheral narrow sides;
wherein each frame element has a plurality of, preferably four, beams connected to each other in a closed configuration which define a free space between them;
wherein the main body of the galvanic cell is received in the free space of two adjacent frame elements; and
wherein at least in the region of the narrow sides of the main body, beyond an edge at which the narrow sides transition into a flat side of the galvanic cell, the cross-sections of portions of the frame elements that face towards the free space are designed to follow the contour of the main body of the galvanic cell.

2. Assembly according to claim 1,
**characterised in that**
the main body of the galvanic cell has an active part which is designed and adapted to receive, store and emit electrical energy and is incorporated in a sandwiched manner by two surrounding foil layers, wherein the surrounding foil layers project on at least two opposing narrow sides laterally away from the narrow sides of the main body and form a sealed seam which tightly closes the active part, and wherein at least portions of the sealed seam are incorporated by beam portions of adjacent frame elements and are axially tensioned by means of the tensioning means.

3. Assembly according to one of the preceding claims,
**characterised in that**
an elastic element is arranged between the narrow sides of the main body of the galvanic cell and the portions of the frame elements following its contour, the elastic element being fixed with material bonding to the frame element.

4. Assembly according to one of the preceding claims,
**characterised in that**
an elastic element is arranged between the narrow sides of the main body of the galvanic cell and the portions of the frame elements following its contour, the elastic portion being fixed in a positive locking manner to the frame element.

5. Assembly according to one of the preceding claims,
**characterised in that**
the narrow sides of the main body of the galvanic cell each have two flanks which each extend in the cross-section from one of the flat sides to a middle plane defined between the two flat sides, wherein an angle between the flanks and the flat side, connecting thereto, of the main body of the galvanic cell is 90° or greater.

6. Assembly according to one of the preceding claims,
**characterised in that**
portions of the frame elements which follow the contour of the main body of the galvanic cell form abutment surfaces for the narrow sides of the main body, wherein the abutment surfaces exert pressure in the radial direction on the narrow sides of the main body.

7. Assembly according to one of the preceding claims,
**characterised in that**
the current conductors are electrically and mechanically connected to the active part, between which two surrounding foil layers extend through the sealed seam and project from the main body outwards, wherein they preferably project away from two opposing narrow sides of the main body, and wherein the sealed seam is incorporated, in particular in the portions in which the current conductors extend through it, by the beam portions of the frame elements and are axially tensioned by means of the tensioning means.

8. Assembly according to one of the preceding claims,
**characterised in that**
the tensioning means has tension anchoring rods which extend through anchor receiving portions of the frame elements in the stacking direction of the assembly and which lie, with respect to a cutting plane perpendicular to the stacking direction, preferably outside of a region of the galvanic cell.

9. Assembly according to claim 8,
**characterised in that**
the anchor receiving portions are formed by webs or lugs which project from the beams of the frame element, preferably as an extension of the respective beam, in particular in each case on both sides as an extension of two parallel beams, transversely to the stacking direction.

10. Assembly according to one of the preceding claims,
**characterised in that**
the tensioning means has tension anchoring rods which extend through anchor receiving portions of the frame elements in the stacking direction of the assembly, wherein the tension anchoring rods extend, with respect to a cutting plane perpendicular to the stacking direction, outside of a region of the galvanic cell, wherein the anchor receiving portions are formed by webs or lugs which project from the beams of the frame element, preferably as an extension of a respective beam, in particular in each case on both sides as an extension of two parallel beams, transversely to the stacking direction.

11. Assembly according to one of the preceding claims,
**characterised in that**
the current conductors of the galvanic cell are freely accessible from externally.

12. Assembly according to one of the preceding claims,
**characterised in that**
with respect to a cutting plane transversely to the stacking direction, the area defined by a surrounding curve of the frame element receives the outline of the galvanic cell completely.

13. Assembly according to one of the preceding claims,
**characterised in that**
the current conductors of a plurality of galvanic cells are connected to each other by means of connecting elements in such a way that the galvanic cells form within the assembly a series arrangement or a parallel arrangement or a combination thereof.

14. Assembly according to one of the preceding claims,
**characterised in that**
the galvanic cell(s) is / are (a) secondary cell(s), wherein the active part has at least one material containing lithium.

15. Electrical energy storage device, in particular traction or drive battery, for a vehicle, with an assembly according to one of the preceding claims.

16. Vehicle with an electrical energy storage device according to claim 15.

## Revendications

1. Agencement d'au moins une cellule galvanique et d'au moins deux éléments de cadre, une cellule galvanique respective étant disposée entre deux éléments de cadre, l'agencement formant une pile et présentant un dispositif de serrage, qui serre l'agencement dans le sens de la pile, la cellule galvanique présentant un corps principal plat et au moins deux dérivateurs de courant, le corps principal présentant deux faces plates et des faces étroites périphériques ; chaque élément de cadre présentant plusieurs, de préférence quatre, barres fermées les unes aux autres qui délimitent entre elles un espace libre ; le corps principal de la cellule galvanique étant logé dans l'espace libre de deux éléments de cadre adjacents ; et au moins dans la région des faces étroites du corps principal au-delà d'une arête sur laquelle les faces étroites se transforment en une face plate de la cellule galvanique, des sections des éléments de cadre tournées vers l'espace libre étant ainsi formées dans la section transversale du contour du corps principal de la cellule galvanique.

2. Agencement selon la revendication 1, **caractérisé en ce que** le corps principal de la cellule galvanique présente une partie active, qui est conçue et disposée pour recevoir, pour stocker et pour délivrer l'énergie électrique et est bordée à la façon d'un sandwich de deux couches de feuille enveloppante, les couches de feuille enveloppante dépassant au moins sur deux faces étroites en regard l'une de l'autre latéralement des faces étroites du corps principal et formant un cordon de soudure, qui ferme hermétiquement la partie active, et au moins des sections du corps de soudure sont bordées par des sections de barre des éléments de cadre adjacents et sont serrées axialement au moyen du dispositif de serrage.

3. Agencement selon l'une quelconque des revendications précédentes, **caractérisé en ce qu'**entre les faces étroites du corps principal de la cellule galvanique et les sections des éléments de cadre qui suivent leur contour, est disposé un élément élastique qui est fixé par liaison de matière sur l'élément de cadre.

4. Agencement selon l'une quelconque des revendications précédentes, **caractérisé en ce qu'**entre les faces étroites du corps principal de la cellule galvanique et les sections des éléments de cadre qui suivent leur contour, est disposé un élément élastique qui est fixé par liaison de matière sur l'élément de cadre.

5. Agencement selon l'une quelconque des revendications précédentes, **caractérisé en ce que** les faces étroites du corps principal de la cellule galvanique présentent respectivement deux flancs qui s'étendent en coupe transversale respectivement depuis l'une des faces plates vers un plan médian délimité entre les deux faces plates, un angle entre les flancs et la face plate suivante du corps principal de la cellule galvanique étant supérieur ou égal à 90°.

6. Agencement selon l'une quelconque des revendications précédentes **caractérisé en ce que** des sections des éléments de cadre qui suivent le contour du corps principal de la cellule galvanique, forment des surfaces d'appui pour les faces étroites du corps principal, les surfaces d'appui exercent une pression dans le sens radial sur les faces étroites du corps principal.

7. Agencement selon l'une quelconque des revendications précédentes, **caractérisé en ce que** les dérivateurs de courant sont reliés électriquement et mécaniquement à la partie active, s'étendent à travers le cordon de soudure entre les deux couches de feuille enveloppante et dépassent du corps principal vers l'extérieur, lesdits dérivateurs de courant dépassant de préférence de deux faces étroites du corps principal en regard l'une de l'autre, et le cordon de soudure borde en particulier dans les sections respectives, que traversent les dérivateurs de courant et est serré axialement au moyen du dispositif de serrage.

8. Agencement selon l'une quelconque des revendications précédentes, **caractérisé en ce que** le dispositif de serrage présente des ancres de traction qui s'étendent par des sections de réception d'ancre de l'élément de cadre dans la direction de pile de l'agencement et qui par rapport à un plan de coupe sont perpendiculaires à la direction de la pile, de préférence en dehors d'une région de la cellule galvanique.

9. Agencement selon la revendication 8, **caractérisé en ce que** les sections de réception d'ancre son formées par des barrettes ou des attaches qui dépassent des barres de l'élément de cadre, de préférence dans la prolongation d'une barre respective, en particulier respectivement de chaque côté dans la prolongation de deux barres parallèles, perpendiculairement à la direction de pile.

10. Agencement selon l'une quelconque des revendications 5, **caractérisé en ce que** le dispositif de serrage présente des ancres de traction qui s'étendent à travers des sections de réception d'ancre des éléments de cadre dans la direction de pile de l'agencement, les ancres de traction, par rapport à un plan de section s'étendant perpendiculairement à la direction de pile, en dehors d'une région de la cellule galvanique, les sections de réception d'ancre étant formées par des barrettes ou des attaches qui dépassent des barres de l'élément de cadre, de préférence dans la prolongation respectivement d'une barre, en particulier respectivement de chaque côté dans la prolongation de deux barres parallèles, perpendiculairement à la direction de pile.

11. Agencement selon l'une quelconque des revendications précédentes, **caractérisé en ce que** les dérivateurs de courant de la cellule galvanique sont librement accessibles depuis l'extérieur.

12. Agencement selon l'une quelconque des revendications précédentes, **caractérisé en ce que** par rapport à un plan de section perpendiculairement à la direction de pile, la surface délimitée par une ligne placée par une courbe d'enveloppe de l'élément de cadre reçoit entièrement le contour de la cellule galvanique.

13. Agencement selon l'une quelconque des revendications précédentes, **caractérisé en ce que** les dérivateurs de courant de plusieurs cellules galvaniques sont reliées les uns aux autres au moyen d'éléments de liaison de telle sorte que les cellules galvaniques dans l'agencement forment un circuit en série ou un circuit en parallèle ou encore leur combinaison.

14. Agencement selon l'une quelconque des revendications précédentes, **caractérisé en ce que** la(les) cellule(s) galvanique(s) est/sont une (des) cellule(s) secondaire(s), la partie active présentant au moins une matière qui comprend du lithium.

15. Dispositif de stockage d'énergie électrique, en particulier une batterie de traction ou d'entraînement, pour un véhicule, dotée d'un agencement selon l'une quelconque des revendications précédentes.

16. Véhicule doté d'un dispositif de stockage d'énergie électrique selon la revendication 15.
